# EUROPÄISCHE PATENTSCHRIFT

(11) **EP 0 465 956 B1**
(45) Veröffentlichungstag und Bekanntmachung des Hinweises auf die Patenterteilung: **19.05.1993**
(21) Anmeldenummer: 91110736.5
(22) Anmeldetag: 28.06.1991
(51) Int. Cl.: F15B 1/00, F04B 23/02, F04B 39/06

(54) **Pumpvorrichtung**
Power unit
Dispositif d'alimentation sous pression

(30) Priorität: 12.07.1990 DE 9010505 U
(43) Veröffentlichungstag der Anmeldung: 15.01.1992
(73) Patentinhaber: WIWA WILHELM WAGNER GMBH & CO. KG, D-35631 Lahnau (DE)
(72) Erfinder: Leinweber, Günter, W-6335 Lahnau 1 (DE)
(74) Vertreter: Missling, Arne, Dipl.-Ing.

(56) Entgegenhaltungen:
- EP-A- 0 244 516
- DE-U- 8 116 387
- GB-A- 2 114 235
- US-A- 4 206 805
- PATENT ABSTRACTS OF JAPAN vol. 6, no. 196 (M-161)(1074) 05 Oktober 1982, & JP-A-57 103901 (DAIKIN) 28 Juni 1982,

## Beschreibung

Die Erfindung bezieht sich auf eine Pumpvorrichtung mit einem Motor, welcher mittels einer in einem Gehäuse angeordneten Kupplung mit einer Hydraulikpumpe betriebsverbunden ist, wobei die Hydraulikpumpe über eine Fluid-Ansaugleitung mit einem Fluidreservoir in Verbindung steht und einen Leckölauslaß aufweist.

Pumpvorrichtungen der genannten Art werden beispielsweise verwendet, um Hydraulikmotoren anzutreiben, mit Hilfe derer weitere Aggregate, beispielsweise Materialpumpen betätigbar sind. Der Antriebsmotor kann dabei ein Elektro- oder ein Verbrennungsmotor sein.

Bei den bekannten Anordnungen ergibt sich ein wesentlicher Nachteil daraus, daß während der Stillstandszeiten des Motors Lecköl auftritt, welches eine sehr hohe Temperatur aufweist. Aus diesem Grunde ist es erforderlich, dieses Lecköl zu kühlen, aus dem Stand der Technik sind Vorrichtungen bekannt, bei welchen diese Kühlung durch zusätzliche Ölkühler erfolgte. Dabei ist es nachteilig, daß ein zusätzliches Aggregat mit einem Lüfter erforderlich ist, welches insbesondere bei transportablen Einheiten zusätzlichen Raum beansprucht, das Gesamtgewicht der Anlage erhöht und elektrische Energie benötigt. Abgesehen davon fallen für einen zusätzlichen Ölkühler erhebliche Herstellungskosten an.

Der Erfindung liegt die Aufgabe zugrunde, eine Pumpvorrichtung der eingangs genannten Art zu schaffen, bei welcher unter Vermeidung der aus dem Stand der Technik bekannten Nachteile eine wirksame Kühlung des Lecköles möglich ist.

Erfindungsgemäß wird die Aufgabe dadurch gelöst, daß das Gehäuse der Kupplung als Wärmetauscher ausgebildet ist und mit zumindest einem Durchlaufkanal für das aus der Hydraulikpumpe austretende Leckageöl versehen ist, und daß der Auslaß des Durchlaufkanales mit dem Fluidreservoir in Verbindung steht.

Die erfindungsgemäße Pumpvorrichtung zeichnet sich durch eine Reihe erheblicher Vorteile aus. Da erfindungsgemäß das bereits vorhandene Gehäuse der Kupplung als Wärmetauscher verwendet wird, erübrigt es sich, zusätzliche, weitere Bauelemente vorzusehen. Das Gehäuse der Kupplung bietet ohne zusätzlichen Materialaufwand ausreichend Gelegenheit, als Durchlauf-Wärmetauscher zu wirken und einen Durchlaufkanal einzubringen. Es erweist sich hierbei als besonders günstig, daß sich die Kupplung in dem Gehäuse bei einer Drehung des Motors in Drehbewegung befindet, wodurch stets eine gewisse Umwälzung der Umgebungsluft auch im Innenraum des Gehäuses stattfindet, so daß die Kühlwirkung erhöht wird. Weiterhin ist es möglich, die Außengestalt des Gehäuses zu optimieren, beispielsweise unter Verwendung von Kühlrippen o.ä..

Ein weiterer, wesentlicher Vorteil liegt darin, daß die gesamte Baugröße der Anlage nicht vergrößert wird, so wie dies aus dem Stand der Technik bei Verwendung eines separaten Ölkühlers der Fall ist.

In günstiger Weise ist das Gehäuse der Kupplung so ausgebildet, daß dieses zylinderförmig ist und daß sich der Durchlaufkanal mäanderförmig in dem Gehäuse erstreckt. Hierdurch wird eine besonders große Länge des Durchlaufkanales erreicht, um den Wärmeübergang zu verbessern.

Um die Kühlwirkung zu steigern kann es sich weiterhin als besonders vorteilhaft erweisen, wenn in dem Innenraum des Gehäuses auf der Abtriebswelle des Motors ein Lüfterrad befestigt ist und das Gehäuse Öffnungen zum Lufteintritt bzw. zum Luftaustritt aufweist. Es erfolgt hierbei bei Drehung der Abtriebswelle des Motors eine Zwangs-Luftdurchführung durch den Innenraum des Gehäuses, welche zu einer weiteren Kühlung beiträgt.

Der Durchlaßkanal des Gehäuses kann erfindungsgemäß auch mit zumindest einem weiteren Hydraulikaggregat verbunden sein, beispielsweise mit einer Materialpumpe für ein Farbspritzgerät oder mit einem Regelventil. Es ist somit möglich, nicht nur das aus der Hydraulikpumpe selbst austretende Leckageöl, sondern auch das Leckageöl der weiteren Hydraulikaggregate wirkungsvoll zu kühlen.

In einer besonders günstigen Ausgestaltung der Erfindung ist vorgesehen, daß der Durchlaufkanal eine Mehrzahl von sich parallel zur Abtriebswelle des Motors erstreckenden Bohrungen umfaßt, welche jeweils paarweise über Quernuten miteinander verbunden sind. Bei einer zylindrischen Ausgestaltung des Gehäuses vereinfacht sich der Herstellungsvorgang ganz erheblich, da die Bohrungen des Durchlaufkanales über einfache Bohrwerkzeuge eingebracht werden können. Die Verwendung von Quernuten zur Verbindung der einzelnen Bohrungen ist ebenfalls herstellungstechnisch sehr günstig, zum Abdichten und Verschließen der Quernuten kann eine obere und eine untere Deckplatte dienen.

Im folgenden wird die Erfindung anhand eines Ausführungsbeispieles in Verbindung mit der Zeichnung beschrieben. Dabei zeigt:
- Fig. 1: eine schematische Darstellung eines Ausführungsbeispieles der erfindungsgemäßen Pumpvorrichtung, teils im Schnitt, in Betriebsverbindung mit weiteren Hydraulikaggregaten,
- Fig. 2: eine schematische Darstellung der Ausbildung des Durchlaufkanales in einer Abwicklung eines Teiles des Gehäuses der Kupplung,
- Fig. 3: eine vergrößerte Schnittansicht des erfindungsgemäßen Kupplungsgehäuses und
- Fig. 4: eine Draufsicht, teils im Schnitt, auf die in Fig. 3 gezeigte Anordnung.

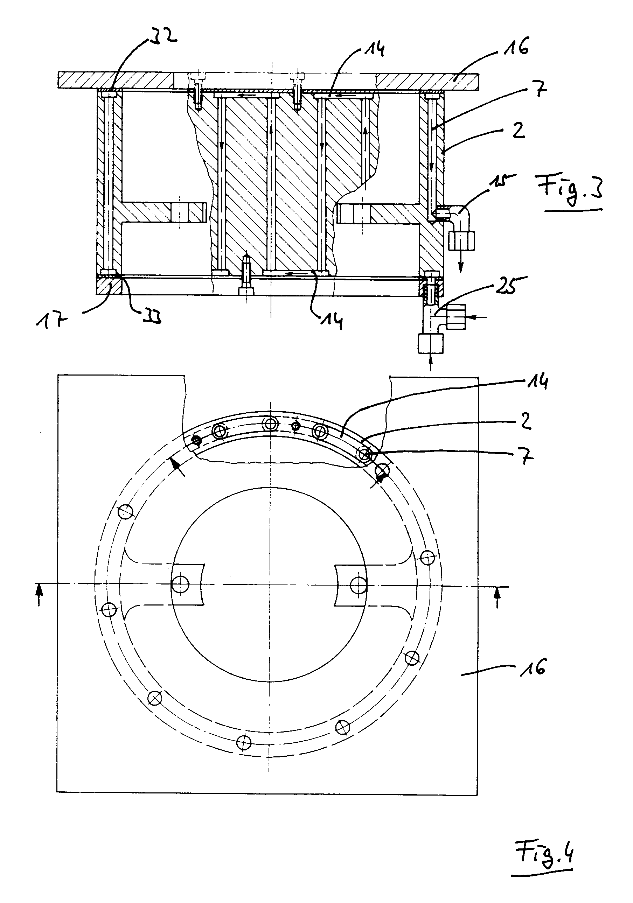

Die erfindungsgemäße Pumpvorrichtung weist einen Motor 1 auf, welcher über eine Kupplung 3 mit einer Hydraulikpumpe 4 verbunden ist. Die Kupplung 3 ist in einem Gehäuse 2 angeordnet, welches, wie insbesondere aus Fig. 3 ersichtlich ist, im wesentlichen zylindrisch ausgebildet ist. Die Hydraulikpumpe 4 ist über eine Fluid-Ansaugleitung 5 mit einem Fluidreservoir 6 verbunden, welchem unter Zwischenschaltung eines Filters 18 Hydraulikfluid über eine Rücklaufleitung 19 rückgeleitet wird. Im Bereich des Fluidreservoirs ist ein Regelventil 13 vorgesehen, weiterhin kann das Fluidreservoir 6 mit Einfüllmitteln 20 versehen sein.

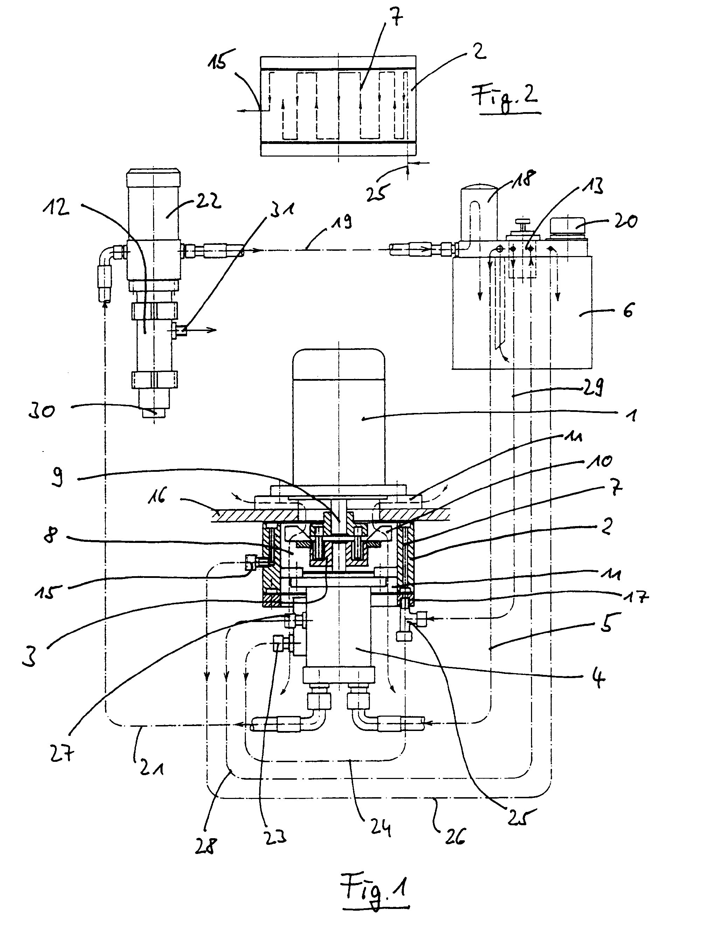

Wie in der Anordnung gemäß Fig. 1 dargestellt, wird das aus der Hydraulikpumpe 4 austretende Hydraulikfluid über eine Druckleitung 21 einem Hydromotor 22 zugeleitet, welcher mit einer Materialpumpe 12 betriebsverbunden ist. Der Hydromotor 22 steht in Verbindung mit der Rücklaufleitung 19.

Weiterhin weist die Hydraulikpumpe 4 einen Leckölauslaß 23 auf, welcher über eine Leitung 24 mit einem Einlaß 25 verbunden ist, welcher an dem Gehäuse 2 vorgesehen ist. Das Gehäuse 2 umfaßt einen Durchlaufkanal 7, welcher in Betriebsverbindung mit dem Einlaß 25 steht, so daß das Lecköl durch den Einlaß 25 in den Durchlaufkanal 7 geleitet wird. Über einen Auslaß 15 wird das Lecköl mittels einer Leitung 26 in das Reservoir 6 rückgeführt. Die Ausgestaltung des Gehäuses 2 und des Durchlaufkanales 7 wird nachfolgend im einzelnen in Zusammenhang mit den Fig. 2 - 4 beschrieben.

Die Hydraulikpumpe 4 umfaßt weiterhin einen Druckölauslaß 27, welcher über eine Leitung 28 mit dem Regelventil 13 in Verbindung steht. Weiterhin ist eine Leitung 29 vorgesehen, welche dazu dient, Lecköl von dem Regelventil 13 dem Einlaß 25 zuzuführen.

Die Materialpumpe 9 umfaßt eine Ansaugöffnung 30 sowie einen Materialauslaß 31.

Die Fig. 2 zeigt einen Teil einer Abwicklung des Gehäuses 2, aus welcher sich ergibt, daß sich der Durchlaufkanal 7 mäanderförmig in dem Gehäuse 2 erstreckt. Im einzelnen wird der Verlauf des Durchlaufkanales 7 anhand der Fig. 3 und 4 beschrieben.

Aus den Fig. 3 und 4 ergibt sich, daß der Durchlaufkanal 7 aus einer Vielzahl von einzelnen Bohrungen besteht, welche parallel zu einer Abtriebswelle 9 des Motors 1 angeordnet sind. Die einzelnen Bohrungen sind mittels Quernuten 14 miteinander verbunden, welche, wie insbesondere aus Fig. 4 ersichtlich ist, am oberen Randbereich des zylindrischen Gehäuses 2 eingebracht sind. Die Nuten 14 sind durch eine obere 16 bzw. untere 17 Deckplatte abgedeckt, welche jeweils über eine Dichtung 32,33 gegen das Gehäuse 3 abgedichtet sind. Die obere Deckplatte 16 kann beispielsweise zur Lagerung der gesamten Motor-Hydraulikpumpenanordnung dienen, während die untere Deckplatte 17 beispielsweise ringförmig ausgebildet ist.

Wie in Fig. 1 gezeigt, ist es weiterhin möglich, in dem Innenraum 8 des Gehäuses 2 ein Lüfterrad 10 anzuordnen, welches an die Abtriebswelle 9 des Motors 1 angeflanscht ist. Das Gehäuse 2 umfaßt bevorzugterweise Öffnungen 11 zum Eintritt bzw. Austritt von Kühlluft, welche durch das Lüfterrad 10 gefördert werden kann.

## Patentansprüche

1. Pumpvorrichtung mit einem Motor (1), welcher mittels einer in einem Gehäuse (2) angeordneten Kupplung (3) mit einer Hydraulikpumpe (4) betriebsverbunden ist, wobei die Hydraulikpumpe (4) über eine Fluid-Ansaugleitung (5) mit einem Fluidreservoir (6) verbunden ist und einen Leckölauslaß (23) aufweist, **dadurch gekennzeichnet**, daß das Gehäuse (2) der Kupplung (3) als Wärmetauscher ausgebildet und mit zumindest einem Durchlaufkanal (7) für das aus der Hydraulikpumpe (4) austretende Leckageöl versehen ist, und daß der Auslaß (15) des Durchlaufkanales (7) mit dem Fluidreservoir (6) in Verbindung steht.

2. Vorrichtung nach Anspruch 1, dadurch gekennzeichnet, daß das Kupplungsgehäuse (2) zylindrisch ausgebildet ist und sich der Durchlaufkanal (7) mäanderförmig in dem Gehäuse (2) erstreckt.

3. Vorrichtung nach einem der Ansprüche 1 oder 2, dadurch gekennzeichnet, daß in dem Innenraum (8) des Gehäuses (2) auf der Abtriebswelle (9) des Motors (1) ein Lüfterrad (10) befestigt ist und daß das Gehäuse (2) Öffnungen (11) zum Lufteintritt bzw. Luftaustritt aufweist.

4. Vorrichtung nach einem der Ansprüche 1 - 3, dadurch gekennzeichnet, daß dem Durchlaufkanal (7) Leckageöl zumindest eines weiteren Hydraulikaggregates (12, 13) zugeleitet wird.

5. Vorrichtung nach Anspruch 4, dadurch gekennzeichnet, daß das weitere Hydraulikaggregat eine Materialpumpe (12) für ein Farbspritzgerät oder ein Regelventil (13) ist.

6. Vorrichtung nach einem der Ansprüche 1 - 5, dadurch gekennzeichnet, daß der Durchlaufkanal (7) eine Mehrzahl von sich parallel zur Abtriebswelle (9) des Motors (1) erstreckenden Bohrungen umfaßt, welche jeweils paarweise über Quernuten (14) miteinander verbunden sind.

## Claims

1. A pump device with a motor (1), which is operationally connected to a hydraulic pump (4) by means of a coupling (3) arranged in a housing (2), the hydraulic pump (4) being connected to a fluid reservoir (6) via a fluid suction pipe (5) and having a leak oil outlet (23), characterised in that the housing (2) of the coupling (3) is formed as a heat exchanger and is provided with at least one continuous channel (7) for the leakage oil coming out of the hydraulic pump (4), and in that the outlet ( 15) of the continuous channel (7) is connected to the fluid reservoir (6).

2. A device according to Claim 1, characterised in that the coupling housing (2) is cylindrical in form and the continuous channel (7) extends in a meandering manner in the housing (2).

3. A device according to either of Claims 1 or 2, characterised in that a fan wheel (10) is mounted in the interior space (8) of the housing (2) on the output shaft (9) of the motor (1) and in that the housing (2) has openings (11) for the entry and/or exit of air.

4. A device according to any one of Claims 1 - 3, characterised in that leakage oil from at least one additional hydraulic unit (12, 13) is fed to the continuous channel (7).

5. A device according to Claim 4, characterised in that the additional hydraulic unit is a material pump (12) for a paint spraying device or a regulating valve (13).

6. A device according to Claims 1 - 5, characterised in that the continuous channel (7) comprises a plurality of boreholes which extend parallel to the output shaft (9) of the motor (1) and which are each connected to one another in pairs via transverse grooves (14).

## Revendications

1. Dispositif d'alimentation sous pression, comportant un moteur (1), relié par l'intermédiaire d'un accouplement (3) disposé dans un carter (2), à une pompe hydraulique (4) pour l'entraîner, la pompe hydraulique (4) étant reliée, par l'intermédiaire d'une conduite d'aspiration d'huile (5), avec un réservoir de fluide, et comportant une évacuation de l'huile de fuite (23), caractérisé en ce que le carter (2) de l'accouplement (3) est réalisé sous la forme d'un échangeur de chaleur et comporte au moins un canal de circulation (7) pour l'huile de fuite s'échappant de la pompe hydraulique (4), et en ce que la sortie (15) du canal de circulation (7) est reliée au réservoir de fluide (6).

2. Dispositif d'alimentation sous pression suivant la revendication 1, caractérisé en ce que le carter (2) de l'accouplement est réalisé cylindrique et en ce que le canal de circulation (7) a un tracé formant des méandres dans le carter (2).

3. Dispositif d'alimentation sous pression suivant la revendication 1 ou la revendication 2, caractérisé en ce que, dans le volume intérieur (8) du carter (2), sur l'arbre de sortie (9) du moteur (1), est fixé un rotor de ventilateur (10) et en ce que le carter (2) présente des ouvertures (11) pour l'entrée et la sortie de l'air.

4. Dispositif d'alimentation sous pression suivant l'une quelconque des revendications 1 à 3, caractérisé en ce que de l'huile de fuite provenant d'au moins un autre ensemble hydraulique (12, 13) est envoyée au canal de circulation (7).

5. Dispositif d'alimentation sous pression suivant la revendication 4, caractérisé en ce que l'autre ensemble hydraulique est une pompe (12) pour un engin de projection de peinture ou une soupape de régulation (13).

6. Dispositif d'alimentation sous pression suivant l'une quelconque des revendications 1 à 5, caractérisé en ce que le canal de circulation (7) comporte un grand nombre d'alésages dirigés parallèlement à l'arbre de sortie (9) du moteur et reliés chacun par paires, les uns avec les autres, par l'intermédiaire de rainures transversales (14).
